# EUROPEAN PATENT APPLICATION

(11) **EP 3 716 064 A1**
(43) Date of publication of application: **30.09.2020**
(21) Application number: 20152883.3
(22) Date of filing: 21.01.2020
(51) Int. Cl.: G06F 9/50, G06F 9/38, G06F 11/36

(54) **PERFORMANCE MANAGEMENT UNIT AIDED TIER SELECTION IN HETEROGENEOUS MEMORY**

(30) Priority: 29.03.2019 US 201916370543
(71) Applicant: INTEL Corporation, Santa Clara, CA 95054 (US)
(72) Inventor: Sane, Harshad, Portland, OR 97229 (US); Doshi, Kshitij, Tempe, AZ 85282 (US)
(74) Representative: Samson & Partner Patentanwälte mbB

(57) **Abstract**

A processor including a processing core to execute an instruction prior to executing a memory allocation call; one or more last branch record (LBR) registers to store one or more recently retired branch instructions; a performance monitoring unit (PMU) comprising a logic circuit to: retrieve the one or more recently retired branch instructions from the one or more LBR registers; identify, based on the retired branch instructions, a signature of the memory allocation call; provide the signature to software to determine a memory tier to allocate memory for the memory allocation call.

## Description

### Technical Field

This disclosure generally relates to computer technology; in particular the disclosure relates to memory allocation in tiered memory systems.

### Background

Heterogeneous memory is memory that includes multiple tiers of memory which are comprised of different types of storage hardware. Memory allocation in multi-tiered hetero-memory can be controlled by hardware under directly-mapped association between lower and upper tiers. Memory allocation can also be controlled by software to assign data to an appropriate tier of memory.

### Brief Description of the Drawings

Figure 1 is a system block diagram of a computing device for dynamic allocation of memory based on an execution context of a memory allocation request.
Figure 2A is a block diagram illustrating example allocation pathways leading to a memory allocation call according to an implementation.
Figure 2B is a block diagram illustrating a number of different example allocation pathways associated with a signature.
Figure 2C is a table illustrating properties associated with each signature for an allocation pathway.
Figure 3 is a block diagram of example memory allocations to different tiers of memory based on properties of the allocation paths.
Figure 4 is a flow diagram of an example method for dynamic memory tier selection using a signature assigned to an execution context.
Figure 5 is a flow diagram of an example method for dynamic memory allocation to a memory tier using last branch records to determine an allocation pathway.
Figure 6 is a flow diagram of an example method for monitoring memory allocations to collect information relevant for dynamic memory tier selection.
Figure 7A is a block diagram illustrating an in-order pipeline and a register renaming stage, out-of-order issue/execution pipeline according to one implementation.
Figure 7B is a block diagram illustrating a micro-architecture for a processor or an integrated circuit that may implement hardware support for a multi-key cryptographic engine, according to an implementation of the disclosure.
Figure 8 illustrates a block diagram of the micro-architecture for a processor or an integrated circuit that implements hardware support for a multi-key cryptographic engine, according to an implementation of the disclosure.
Figure 9 is a block diagram of a computer system according to one implementation.
Figure 10 is a block diagram of a computer system according to another implementation.
Figure 11 is a block diagram of a system-on-a-chip according to one implementation.
Figure 12 illustrates another implementation of a block diagram for a computing system.
Figure 13 illustrates another implementation of a block diagram for a computing system.

### Detailed Description

Determining, in a heterogeneous memory system, which tier of the system to allocate memory may be difficult. Computer applications are generally coded for modularity so that parts of code can easily be reused. Because of code modularity, the logical purpose and/or context of a memory allocation may be obscured. For example, the logical purpose may be located in one part of an application while the section of code that makes a call to an allocator is located in a different part of the application. Profiling an application's execution using traditional methods may be insufficient to tie the frequency with which a memory buffer (i.e., an instance of allocated memory) is accessed to a particular instance of a call to allocate that buffer. Traditional profiling is unable to accurately predict future use of a buffer and is unable to select the most efficient allocation of memory upon a memory allocation call. Generally, a higher tier in a memory system comprises memory types with lower access latency but less capacity, while lower memory tiers comprise memory types with higher access latency with higher capacity. Therefore, the method in which memory is allocated to memory tiers can substantially effect performance of the memory system.

Static allocation mechanisms may be used to select a memory tier for a memory allocation. Static methods may select which memory tier to assign a memory allocation based on specific memory allocation calls within code. However, these methods do not allow for consideration of the logical purpose or context of the memory allocation. A specific memory allocation call may be used for many different purposes in the code of an application. For example, a memory allocation may be defined within a function that is called throughout an application in a number of different contexts. The different purposes for which the memory allocation is called may provide for different uses of the allocated memory buffer. One allocation context may use the buffer often, yet in a different context the buffer may be used very little. Software memory tier selection methods may provide for more flexible memory allocation. However there is a large overhead associated with application profiling and data collection which can significantly impact application performance. Thus, it may be necessary to identify and use the context in which a memory allocation call is made to provide for efficient use of memory tiers.

Embodiments described herein may address the above deficiencies. An instruction may be executed by a processor before a memory allocation call is executed to retrieve a number of previously retired instructions leading up to the memory allocation (referred to herein as an "allocation path") and associate that allocation path with an identifier. A performance management unit (PMU) may collect information about a memory buffer allocated by the memory allocation call. A memory allocation call is referred to herein as a malloc call. However, any other type of memory allocation call or library may be used. The PMU may continuously collect information about the memory buffers. The information may indicate how the memory buffer associated with the allocation path is used (e.g., how often the buffer is accessed). Software may then use the identifier of the allocation path to select an optimal memory tier for subsequent memory allocations based on the past use of the memory buffer associated with the identifier.

In one embodiment, the PMU may associate the allocation path with an identifier, referred to herein as a "signature," to identify the allocation path. The signature may be a scalar value with which information collected about an allocation path may be associated and identified. The same signature may be associated with every allocated buffer that has the same, or similar, allocation path. The collection of buffers with the same signature may be referred to as a "signature domain." Therefore, information about memory buffers of a signature domain may be collected and aggregated. For example, an access density for the signature may be calculated by dividing the total number of accesses to buffers associated with the signature by the total amount of memory allocated to buffers associated with the signature. Accordingly, a memory tier may be selected for a memory allocation based at least in part on the access density of the signature (e.g., the higher the access density the higher the tier that is selected). The memory tier selection may additionally be based at least in part on the size of buffers associated with the signature and the storage capacity of each of the memory tiers. Information about memory buffers may be continuously collected to provide for dynamic selection of memory tiers for memory allocation based on runtime behavior.

Therefore, embodiment described herein may automate and simplify memory tier selection in heterogeneous memory systems, reducing the burden of software maintenance of memory allocation. Optimal memory tiers may be selected with lower overhead and system performance may be increased across a large variety of hardware configurations. Additionally, embodiments may support the use of large capacity memory tiers, high bandwidth memory tiers, and other variations of memory tier usage.

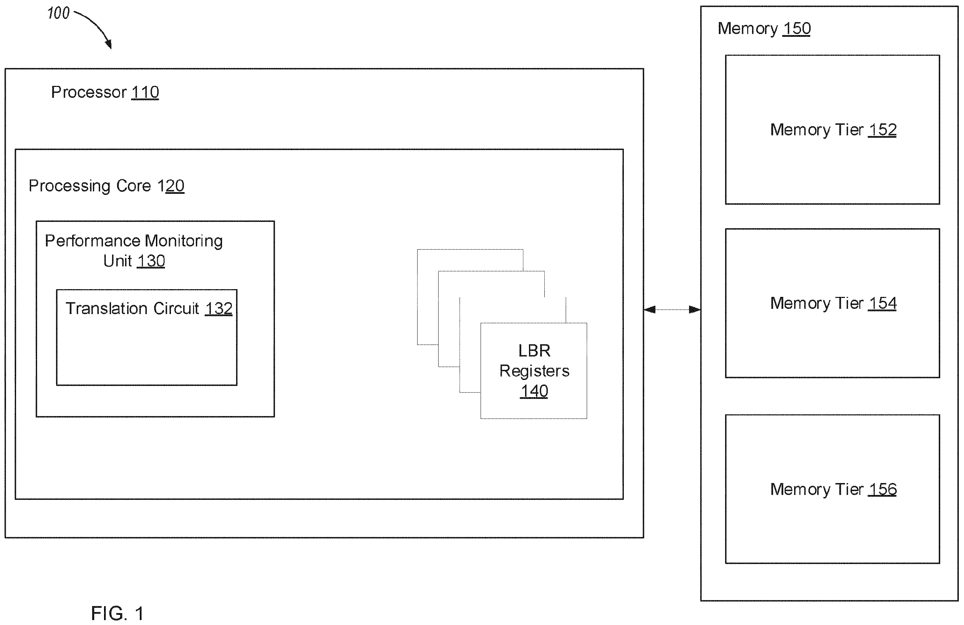

Figure 1 is a block diagram illustrating a system 100 comprising a processor 110 and a memory 150, according to one implementation. Processor 110 may include one or more processing cores 120. The processing core 120 may include a performance monitoring unit (PMU) 130 and a plurality of last branch record (LBR) registers 140. PMU 130 may further include a translation circuit 132 to translate LBRs collected by the LBR registers 140 into an identifier of an execution context. Memory 150 may include multiple tiers of memory 152, 154, and 156 each tier including different types of memory.

LBR registers 140 may store LBRs including information about recently executed branch instructions. For example, the information may include the source address and the destination address of each branch instruction along with additional metadata. The LBRs stored in the LBR registers 140 may represent a control flow of an executing program. An LBR snapshot instruction may retrieve the LBRs from the LBR registers 140 and reconstruct an execution pathway leading up to the current instruction (i.e. the malloc call). In one example, the LBR snapshot instruction may retrieve the LBRs when a malloc call is about to be executed. The LBR snapshot instruction may be added to code by a compiler front-end, or through a wrapper around malloc. The LBR snapshot instruction may use PMU 130 hardware, as described below, to identify a signature associated with an allocation path using the LBRs retrieved from the LBR registers 140.

PMU 130 may be part of an execution unit and may monitor a number of performance characteristics of the processing core 120 including memory access rates, memory allocations, time accounting, etc. The PMU 130 may include a translation circuit 132 to receive and translate the LBR information into a signature identifying an allocation path of a malloc call in response to execution of the LBR snapshot instruction described above. The translation circuit 132 may hash the LBR vector into a 32 bit, 64 bit or other singular scalar value. The translation circuit may be a hash or any other associative hardware structure. In one example, the translation circuit may hash a subset of the LBRs in the LBR registers 140 at the time LBR snapshot is executed. The subset may be, for example, all LBRs associated with function calls and returns, or all LBRs that include non-function branches, etc. The translation circuit 132 may store the identified signature in a hardware register, a cache, a scratchpad area, or the like, to be used by software. Software may then be used to associate a linear address returned by the malloc call and a size of the memory buffer to be allocated by the malloc call with the identified signature. Thus, the signature may be used by software to identify and monitor buffers allocated from a specific allocation path.

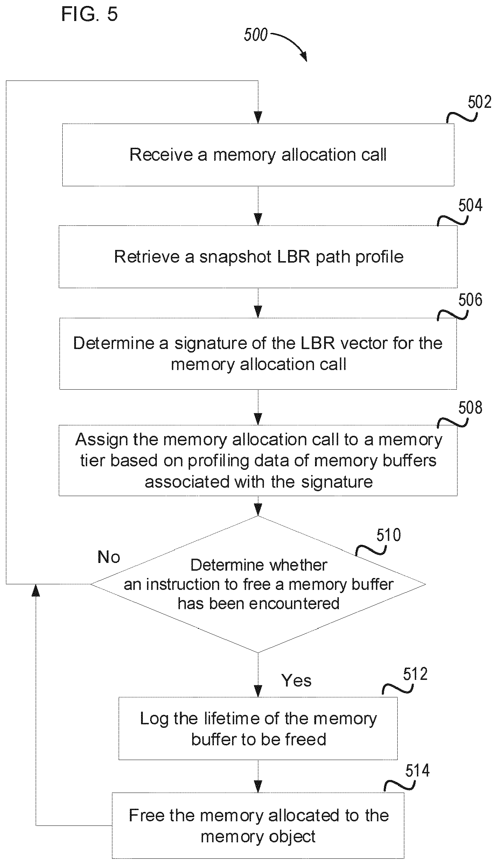

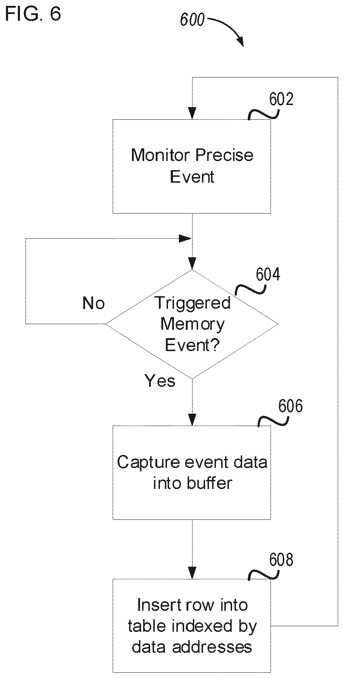

Many different memory buffers may be allocated from a single allocation path. Each memory buffer allocated from the allocation path may be associated with a single signature corresponding to the allocation path. The memory buffers associated with a signature may be referred to as a signature domain. For each signature domain, the PMU 130 may be used to collect information about the buffers of the signature domain. Various types of information may be collected for the buffers. In one example, the PMU 130 may collect memory access data for each buffer. The memory access data may be used to determine memory access frequency and in turn memory access density (i.e. number of access divided by total memory) of the signature domain. The lifespan of buffers may also be collected upon freeing the memory buffer from memory. When a memory buffer is freed, it may also dissociate the signature from the area of memory as well. Collection of memory access data is described in more detail below with respect to Figures 5 and 6.

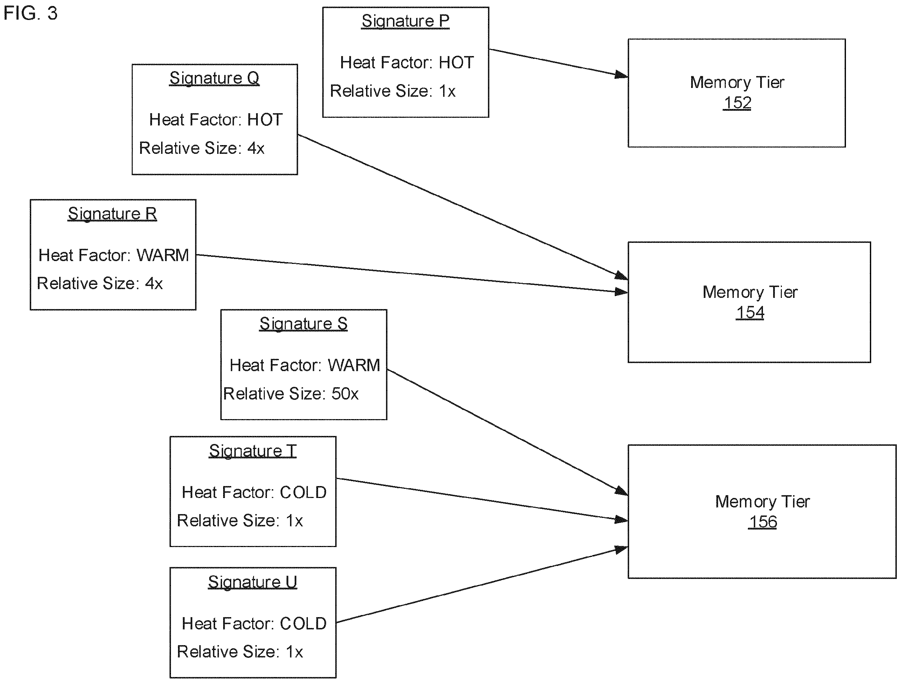

After the signature for the malloc call is determined by the translation circuit 132 of the PMU 130, software may use the identified signature to select a memory tier to allocate a memory buffer from the malloc call. As described above, a variety of information may be collected for each signature domain. The collected information may be used by software to select the memory tier. For example, a memory access density of the signature domain for the signature identified for a malloc call may be used to select an appropriate memory tier. In one example, the larger the access density, the higher the tier selected. In another example, the size, or the time-space product (i.e. the amount of memory allocated multiplied by the time the memory is allocated) associated with the signature may also be used, at least in part, to select a memory tier. For example, the larger the size, and/or the time-space product, the lower the memory tier selected. The selection may also account for the memory capacity of each memory tier (both total capacity and capacity at the time of malloc). Memory tier selection is described in further detail below with respect to Figure 3.

Memory 150 may include one or more memory tiers 152, 154, and 156. Each memory tier may include a different type of memory storage hardware, such as random access memory (RAM), dynamic RAM (DRAM), non-volatile RAM, solid state devices (SSD), hard-disk drives, etc. For example, tier 152 may include DRAM, tier 154 may include a solid state drive and tier 156 may include a hard-disk drive. Each tier may also include a combination of different types of storage hardware. Memory tiers may be determined based on total access latency, read access latency, and/or write access latency. In one example, memory 150 may be tiered based on storage device proximity to the CPU. For example, in a NUMA system, a node that is more distant may be designated as a lower tier of memory because latency may be higher.

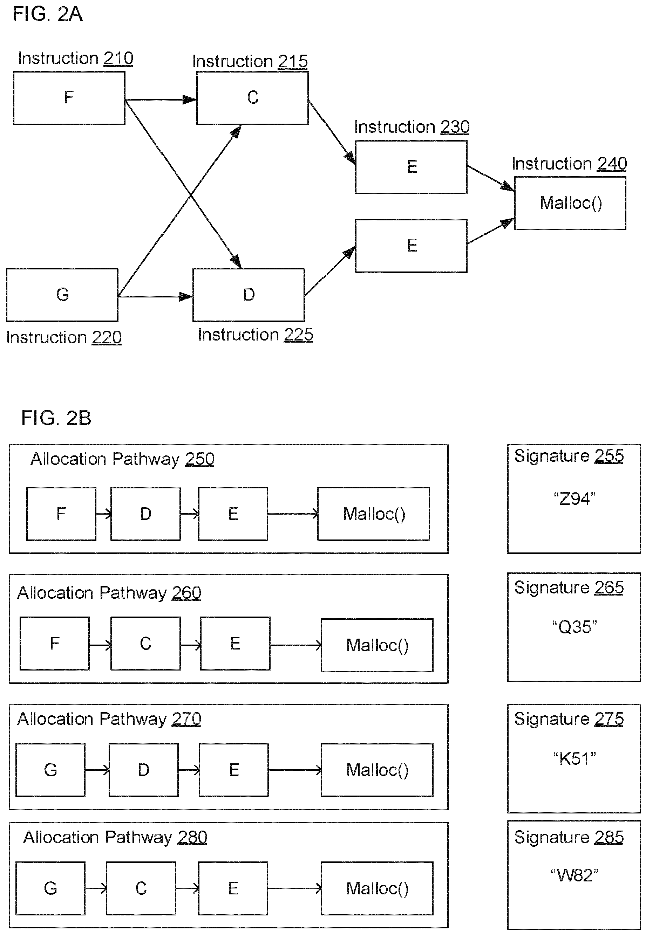

Figure 2A depicts a number of possible allocation paths that may lead to a memory allocation, such as a malloc. For each allocation path depicted, the LBR snapshot instruction may be executed between the execution of E (instruction 230) and malloc (instruction 240) to hash each of the different allocation paths to a unique signature. One example path may begin with execution of F (instruction 210), then C (instruction 215), and then E (instruction 230) followed by the malloc call (instruction 240). Another path may begin with the execution of F (instruction 210), then D (instruction 225), and then E (instruction 230) followed by the malloc call (instruction 240). A third path begins with the execution of G (instruction 220) then C (instruction 215) and then E (instruction 230), followed by the malloc call (instruction 240). Finally, a fourth allocation path depicted may begin with execution of G (instruction 220), then D (instruction 225), and then E (instruction 230), followed by the malloc call (instruction 240). Thus, in the depicted example a single malloc call may be preceded by four different allocation paths. However, it should be noted that the disclosure is not limited to the allocation paths depicted, or the number of instructions depicted in each path. Any number of allocation paths may be taken to a single malloc call and any number of previously executed instructions may be used to identify a signature for an allocation path.

Figure 2B illustrates a example associations of allocation paths to signatures. The allocation paths may be a unique sequence of instructions executed before a malloc call. The unique sequence of instructions may therefore be associated with a unique signature that may be used to identify the allocation path. In one example, as depicted, allocation path 250 may comprise the execution sequence F, D, E followed by malloc. The allocation path 250 may be associated with signature 255, denoted by the value "Z94." Allocation path 260 comprising the execution sequence F, C, E followed by malloc may be associated with signature 265, denoted by the value "Q35." Allocation path 270 comprising the execution sequence G, D, E followed by malloc may be associated with signature 275, denoted by the value "K51." Finally, allocation path 280 comprising the execution sequence G, C, E followed by malloc may be associated with signature 285, denoted by the value "W82." A hash function may be applied to an allocation path to determine the signature to be assigned to the allocation path. The hash function may be a low overhead hash which hashes the LBR vector (allocation path) directly to a scalar value (e.g., a 32 or 64 bit signature).

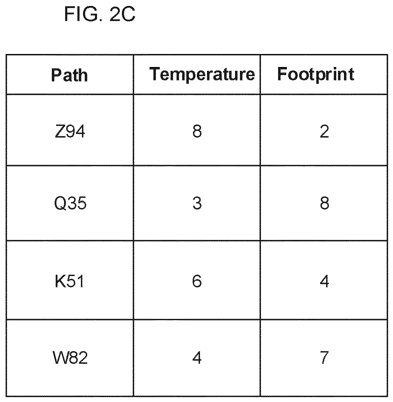

Figure 2C depicts a table illustrating example signatures and data associated with memory buffers in each signature domain. In one example, each signature (identifying an allocation path) is associated with one or more attributes that may be used to select a memory tier for a malloc. The signatures in Figure 2C are each associated with two attributes, "temperature" and "footprint." Temperature may indicate the frequency with which the buffers of the signature domain are accessed. The frequency may be the average frequency for all the memory buffers in the signature domain. Footprint may indicate the amount of memory that is associated with the signature. Additionally, the footprint may account for the lifespan of memory buffers in the signature domain. For example, the footprint may be the average time-space product of the buffers in the signature domain. The temperature and footprint may be averages over all memory buffers in a signature domain.

In one example, a path with the signature "Z94" may have a temperature of "8" and a footprint of "2," while a path with the signature "Q35" may have a temperature "3" and a footprint of "8." Therefore, the memory buffers in the signature domain of Z94 are accessed, on average, more than twice as much as the buffers in the signature domain of Q35. Furthermore, the average footprint of the buffers of Z94 is four times smaller than the footprint of buffers of Q35. Accordingly, it may be most advantageous to allocate the next malloc with the signature Z94 to a higher memory tier than the next malloc with the signature Q35.

Figure 3 depicts example placement of mallocs for several different signatures in memory tiers based on a "heat factor" (access density) and "relative size" (size or time-space product). Access density may be the total number of accesses of a signature domain divided by the total memory allocated in the signature domain. The relative size associated with each signature may be an average size of all buffers in the signature domain. The size of a buffer may refer to the amount of memory occupied by the buffer, or may refer to a time-space product (i.e. amount of memory occupied multiplied by the lifespan of the buffer). Each signature may be categorized by its associated access density. For example, as depicted in Figure 3, the categories may be represented as a heat factor. The heat factor may include three possible categories: HOT, WARM, and COLD. The HOT category may represent the highest range of access densities. WARM may represent a middle range of access densities and COLD may represent the lowest range of access densities. More categories or fewer categories may be used. The classifications may updated periodically to ensure proper selection of memory tiers for mallocs. The memory tiers 152, 154, and 156, may be the same as, or similar to, memory tiers 152, 154, and 156, respectively, as described with respect to Figure 1.

In one example, signatures P, Q, R, S, T, and U may each represent a unique allocation path. Each signature may be placed in a memory tier according to its heat factor and its relative size. In general the hotter signatures (i.e. signatures with higher access densities) and signatures with a smaller size will be placed in higher tiers than colder and larger signatures. Signatures P and Q are both HOT and therefore will be placed in higher tiers than WARM or COLD signatures. However, because there is a limited capacity of memory tier 152 signature P will be placed in memory tier 152 since it is 4x smaller than signature Q. Signatures Q will then be placed in memory tier 2. Similarly, signature R and S are both WARM and thus will be placed in a higher memory tier than COLD signatures. However signature S is much larger in size than signature R and therefore signature S will be placed in memory tier 156 and signature R will be placed in memory tier 154. Signature T and U are both COLD. Signatures that are COLD may be automatically placed in the lowest memory tier. Therefore, signature T and U may be automatically placed in memory tier 156. As shown in Figure 3, placement of each signature may depend on the total capacity of each of the memory tiers as well as the remaining capacity of each tier at any given time. The policy used for memory tier assignment may be dynamic and may be set or updated during program runtime.

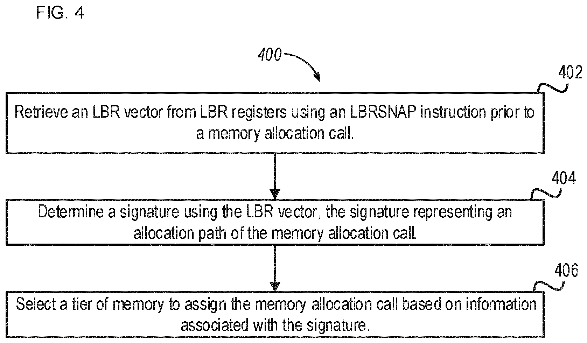

Figure 4 depicts a flow diagram illustrating an example method 400 of dynamic tier allocation based on execution context of a malloc call. At block 402, an LBR vector may be retrieved from a plurality of LBR registers prior to a memory allocation call. An LBRSNAP instruction may be executed immediately before the memory allocation call is executed. The LBR vector may include one or more LBRs which represent an execution context, or allocation path, leading up to the execution of the memory allocation call. The LBRs of the LBR vector may comprise information regarding one or more recently executed branch instructions. For example, the LBRs may include the last thirty-two branch instructions executed and retired by the processor core before the memory allocation call.

At block 404, a signature may be determined from the LBR vector. The signature may represent an allocation path of the memory allocation call. The LBRs retrieved at block 402 may be hashed to a unique scalar value referred to as a signature. The signature may be determined for every malloc call executed by the system. The signature may remain associated with each allocated memory buffer during its lifespan so that a memory access profile may be generated for the signature. Additional information of previous memory allocations with the same allocation path may be collected and associated with the signature to generate the memory access profile.

At block 406, a memory tier may be selected for the memory allocation call based on the signature that was determined from the LBR vector at block 404. A signature domain of the signature may include each buffer associated with the signature. Access statistics of the buffers of a signature domain may be used to determine the memory tier to be selected. For example, an average access density of the buffers in the signature domain may be used to select the memory tier. The cost of a memory allocation, such as size and lifespan, may also be used in the selection. Other considerations in selecting the memory tier may include determining an access density for writes and reads to buffers of a signature domain separately. The access density for writes and reads may be weighted differently in determining a memory tier to select. For example, a buffer with a higher read access density may be placed in a higher memory tier than a buffer with a higher write access density. An application may also indicate which memory allocations to prioritize in higher tiers of memory.

Figure 5 depicts a flow diagram illustrating an example method 500 of dynamic memory tier allocation and collection of memory buffer size, frequency of access, and lifespan. At block 502, an execution unit may receive a malloc call. A malloc call may be a request to allocate a memory buffer in memory of the system. The memory of the system may be heterogeneous and therefore consist of multiple tiers of memory. At block 504, an instruction may be executed prior to the malloc call to retrieve a snapshot of the LBRs collected in the LBR registers (i.e. LBR vector) of a processing core. The number of LBRs retrieved at one time may be all of the LBRs stored in the LBR registers (e.g. all 32 LBRs in some systems). Each LBR may include information pertaining to a retired branch instruction and execution thereof.

At block 506, the PMU may determine a signature of the LBR vector for the malloc call. The signature may be a scalar value representing a unique allocation path. Every memory allocation call with the same allocation path may have the same signature. To determine a signature, a low-overhead hash may be applied to the LBR vector. Thus, the identification of the signature may be done quickly with low impact on performance. Each memory buffer allocated may continue to be associated with the signature to which it was initially hashed. The association may be stored in a data structure that maps all buffers associated with a signature to the signature (i.e. many-to-one). The virtual addresses of the memory buffers may be collected along with the size of the memory buffer. The virtual address may be used to associate a memory buffer with the signature in the data structure. Then the virtual address may be used to track accesses to the memory buffer.

At block 508, a memory allocation may be assigned to a memory tier based on profiling data associated with the signature of the memory allocation call. As indicated above, the signature may remain associated to memory buffers allocated in memory (i.e. a signature domain). Profiling data about the buffers of a signature domain may be collected and aggregated. The aggregated profiling data from the memory domain may include information such as a frequency of accesses to the buffers of the signature domain, the total memory allocated to memory buffers of the domain, an average time that buffers of the signature domain persist in memory, etc. Using the collected profiling data, the allocation call may be allocated to an appropriate memory tier. For example, an access density and a time-space product may be used to select which tier to allocate the memory buffer. Any other profiling data collected that relates to the memory buffers of a signature may be used to select a memory tier as well. Additionally, an application may specify which memory allocation calls to prioritize in higher memory tiers.

At block 510, it may be determined whether an instruction to free a memory buffer is received. If an instruction to free is not received then the process continues to collect access data and to dynamically allocate memory buffers to optimal memory tiers. If an instruction to free a memory buffer is received, the memory buffer to be free may be removed from memory to free up the memory space for other memory allocations. At block 512, the PMU may log the lifetime of the memory buffer to be freed and store the information with the signature of the freed memory buffer. To log the lifetime, the PMU may record a time-stamp at the time of allocation of the memory buffer and a time-stamp at the time of the free instruction. The different between the time-stamps may represent the lifetime of the memory buffer. The information associated with the signature, in particular the time-space product may then be updated to dynamically track the cost of memory allocations for the signature. At block 514, the memory buffer may be freed and the process may continue to allocate memory based on collected profiling information of signature domains and continuously collect and update the profiling information to provide for dynamic memory tier selection.

Figure 6 is a flow diagram of an example method for collecting access profile data associated with a memory buffer. At block 602, the PMU may monitor for the occurrence of a precise event. Precise event based sampling (PEBS) may collect samples for specified events at various intervals configured by an application. For example, a PEBS sample may be collected when memory accesses miss a last level cache (LLC), a translation lookaside buffer miss occurs, or other PEBS events providing indications of memory accesses. At block 604, it may be determined whether a triggered memory event occurred. If not, then the monitoring continues until a triggered memory event occurs, such as a cache miss. If a triggered memory event occurs, then at block 606 the event data is collected in a data buffer. The event data may include the virtual address of the memory access and the source of data of the cache line, based on the type of event being captured. The source of the data may be used to determine if NUMA placement for memory accesses can be optimized (e.g. selecting NUMA nodes similar to selecting memory tiers). At block 608, the collected data may be inserted into a table. The table may be indexed by data addresses so that the collected data can be identified with a signature. The process may continue to repeat, collecting memory access data from the triggered PEBS events and adding up the access counts for each signature domain. In this manner, a relative access rate associated with the memory buffers of a signature domain may be determined on a running basis and used to dynamically select a memory tier (or NUMA node) for a memory allocation call.

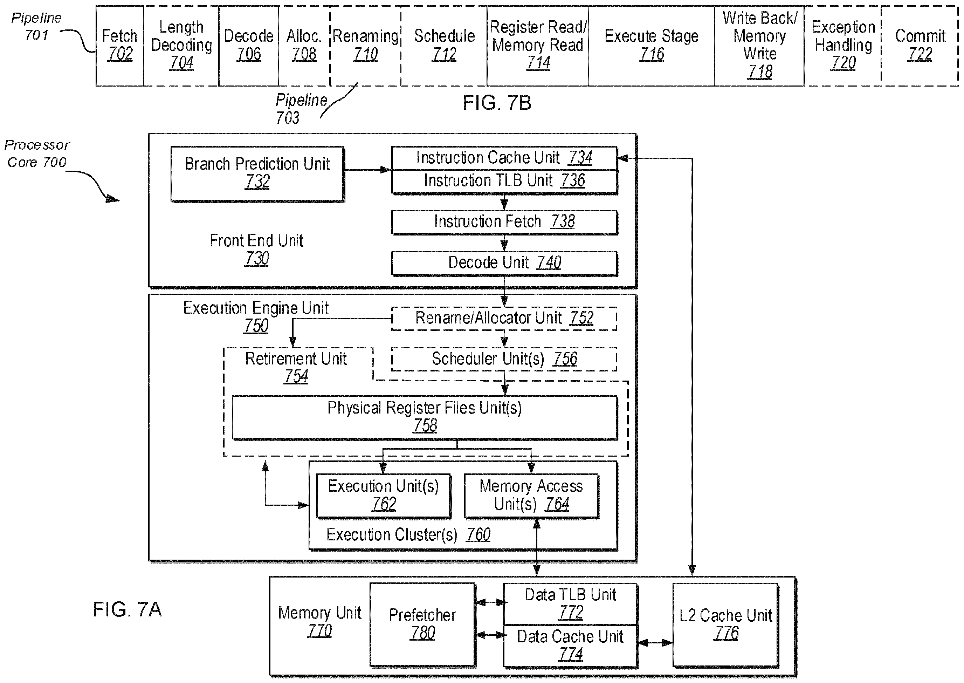

Figure 7A is a block diagram illustrating a micro-architecture for a processor 700 that implements hardware support for dynamic memory allocation in heterogeneous memory systems. Specifically, processor 700 depicts an in-order architecture core and a register renaming logic, out-of-order issue/execution logic to be included in a processor according to at least one implementation of the disclosure.

Processor 700 includes a front end unit 730 coupled to an execution engine unit 750, and both are coupled to a memory unit 770. The processor 700 may include a reduced instruction set computing (RISC) core, a complex instruction set computing (CISC) core, a very long instruction word (VLIW) core, or a hybrid or alternative core type. As yet another option, processor 700 may include a special-purpose core, such as, for example, a network or communication core, compression engine, graphics core, or the like. In one implementation, processor 700 may be a multi-core processor or may be part of a multiprocessor system.

The front end unit 730 includes a branch prediction unit 732 coupled to an instruction cache unit 734, which is coupled to an instruction translation lookaside buffer (TLB) 736, which is coupled to an instruction fetch unit 738, which is coupled to a decode unit 740. The decode unit 740 (also known as a decoder) may decode instructions, and generate as an output one or more micro-operations, micro-code entry points, microinstructions, other instructions, or other control signals, which are decoded from, or which otherwise reflect, or are derived from, the original instructions. The decoder 740 may be implemented using various different mechanisms. Examples of suitable mechanisms include, but are not limited to, look-up tables, hardware implementations, programmable logic arrays (PLAs), microcode read only memories (ROMs), etc. The instruction cache unit 734 is further coupled to the memory unit 770. The decode unit 740 is coupled to a rename/allocator unit 752 in the execution engine unit 750.

The execution engine unit 750 includes the rename/allocator unit 752 coupled to a retirement unit 754 and a set of one or more scheduler unit(s) 756. The scheduler unit(s) 756 represents any number of different scheduler circuits, including reservations stations (RS), central instruction window, etc. The scheduler unit(s) 756 is coupled to the physical register set(s) unit(s) 758. Each of the physical register set(s) units 758 represents one or more physical register sets, different ones of which store one or more different data types, such as scalar integer, scalar floating point, packed integer, packed floating point, vector integer, vector floating point, etc., status (e.g., an instruction pointer that is the address of the next instruction to be executed), etc. The physical register set(s) unit(s) 758 is overlapped by the retirement unit 754 to illustrate various ways in which register renaming and out-of-order execution may be implemented (e.g., using a reorder buffer(s) and a retirement register set(s), using a future file(s), a history buffer(s), and a retirement register set(s); using a register maps and a pool of registers; etc.).

Generally, the architectural registers are visible from the outside of the processor or from a programmer's perspective. The registers are not limited to any known particular type of circuit. Various different types of registers are suitable as long as they are capable of storing and providing data as described herein. Examples of suitable registers include, but are not limited to, dedicated physical registers, dynamically allocated physical registers using register renaming, combinations of dedicated and dynamically allocated physical registers, etc. The retirement unit 754 and the physical register set(s) unit(s) 758 are coupled to the execution cluster(s) 760. The execution cluster(s) 760 includes a set of one or more execution units 762 and a set of one or more memory access units 764. The execution units 762 may perform various operations (e.g., shifts, addition, subtraction, multiplication) and operate on various types of data (e.g., scalar floating point, packed integer, packed floating point, vector integer, vector floating point).

While some implementations may include a number of execution units dedicated to specific functions or sets of functions, other implementations may include only one execution unit or multiple execution units that all perform all functions. The scheduler unit(s) 756, physical register set(s) unit(s) 758, and execution cluster(s) 760 are shown as being possibly plural because certain implementations create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register set(s) unit, and/or execution cluster - and in the case of a separate memory access pipeline, certain implementations are implemented in which only the execution cluster of this pipeline has the memory access unit(s) 764). It should also be understood that where separate pipelines are used, one or more of these pipelines may be out-of-order issue/execution and the rest in-order.

The set of memory access units 764 is coupled to the memory unit 770, which may include a data prefetcher 780, a data TLB unit 772, a data cache unit (DCU) 774, and a level 2 (L2) cache unit 776, to name a few examples. In some implementations DCU 774 is also known as a first level data cache (L1 cache). The DCU 774 may handle multiple outstanding cache misses and continue to service incoming stores and loads. It also supports maintaining cache coherency. The data TLB unit 772 is a cache used to improve virtual address translation speed by mapping virtual and physical address spaces. In one exemplary implementation, the memory access units 764 may include a load unit, a store address unit, and a store data unit, each of which is coupled to the data TLB unit 772 in the memory unit 770. The L2 cache unit 776 may be coupled to one or more other levels of cache and eventually to a main memory.

In one implementation, the data prefetcher 780 speculatively loads/prefetches data to the DCU 774 by automatically predicting which data a program is about to consume. Prefetching may refer to transferring data stored in one memory location (e.g., position) of a memory hierarchy (e.g., lower level caches or memory) to a higher-level memory location that is closer (e.g., yields lower access latency) to the processor before the data is actually demanded by the processor. More specifically, prefetching may refer to the early retrieval of data from one of the lower level caches/memory to a data cache and/or prefetch buffer before the processor issues a demand for the specific data being returned.

The processor 700 may support one or more instructions sets (e.g., the x86 instruction set (with some extensions that have been added with newer versions); the MIPS instruction set of Imagination Technologies of Kings Langley, Hertfordshire, UK; the ARM instruction set (with optional additional extensions such as NEON) of ARM Holdings of Sunnyvale, CA).

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated implementation of the processor also includes a separate instruction and data cache units and a shared L2 cache unit, alternative implementations may have a single internal cache for both instructions and data, such as, for example, a Level 1 (LI) internal cache, or multiple levels of internal cache. In some implementations, the system may include a combination of an internal cache and an external cache that is external to the core and/or the processor. Alternatively, all of the cache may be external to the core and/or the processor.

Figure 7B is a block diagram illustrating an in-order pipeline and a register renaming stage, out-of-order issue/execution pipeline implemented by processor 700 of Figure 7A according to some implementations of the disclosure. The solid lined boxes in Figure 7B illustrate an in-order pipeline 701, while the dashed lined boxes illustrate a register renaming, out-of-order issue/execution pipeline 703. In Figure 7B, the pipelines 701 and 703 include a fetch stage 702, a length decode stage 704, a decode stage 706, an allocation stage 708, a renaming stage 710, a scheduling (also known as a dispatch or issue) stage 712, a register read/memory read stage 714, an execute stage 716, a write back/memory write stage 718, an exception handling stage 722, and a commit stage 724. In some implementations, the ordering of stages 702-724 may be different than illustrated and are not limited to the specific ordering shown in Figure 7B.

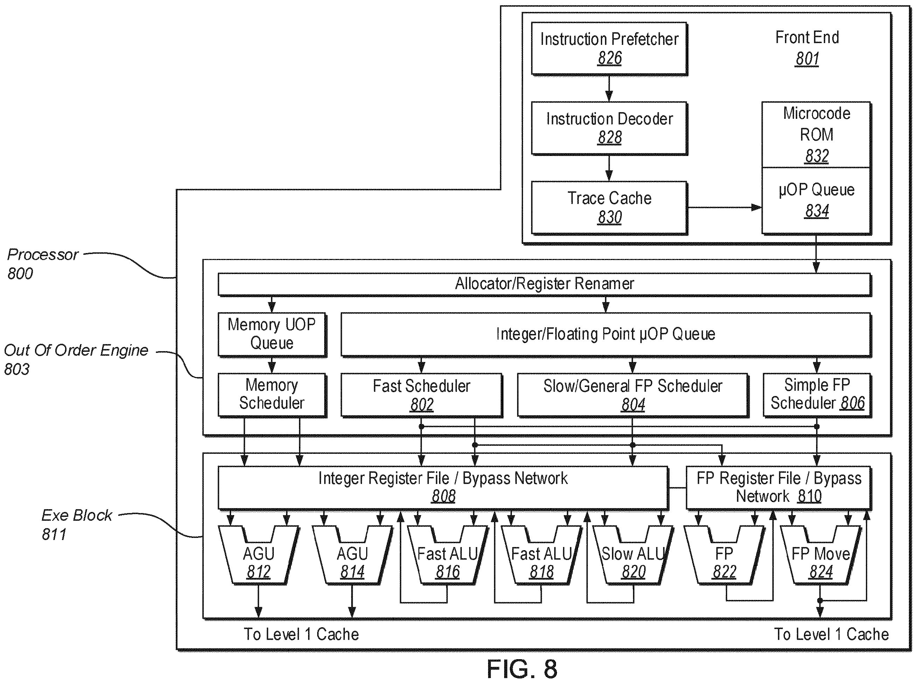

Figure 8 illustrates a block diagram of the micro-architecture for a processor 800 that includes logic circuits of a processor or an integrated circuit that implements hardware support for dynamic memory allocation in heterogeneous memory systems, according to an implementation of the disclosure. In some implementations, an instruction in accordance with one implementation can be implemented to operate on data elements having sizes of byte, word, doubleword, quadword, etc., as well as datatypes, such as single and double precision integer and floating point datatypes. In one implementation the in-order front end 801 is the part of the processor 800 that fetches instructions to be executed and prepares them to be used later in the processor pipeline. The implementations of the page additions and content copying can be implemented in processor 800.

The front end 801 may include several units. In one implementation, the instruction prefetcher 816 fetches instructions from memory and feeds them to an instruction decoder 818 which in turn decodes or interprets them. For example, in one implementation, the decoder decodes a received instruction into one or more operations called "micro-instructions" or "micro-operations" (also called micro op or uops) that the machine can execute. In other implementations, the decoder parses the instruction into an opcode and corresponding data and control fields that are used by the micro-architecture to perform operations in accordance with one implementation. In one implementation, the trace cache 830 takes decoded uops and assembles them into program ordered sequences or traces in the uop queue 834 for execution. When the trace cache 830 encounters a complex instruction, microcode ROM (or RAM) 832 provides the uops needed to complete the operation.

Some instructions are converted into a single micro-op, whereas others need several micro-ops to complete the full operation. In one implementation, if more than four micro-ops are needed to complete an instruction, the decoder 818 accesses the microcode ROM 832 to do the instruction. For one implementation, an instruction can be decoded into a small number of micro ops for processing at the instruction decoder 818. In another implementation, an instruction can be stored within the microcode ROM 832 should a number of micro-ops be needed to accomplish the operation. The trace cache 830 refers to an entry point programmable logic array (PLA) to determine a correct micro-instruction pointer for reading the micro-code sequences to complete one or more instructions in accordance with one implementation from the micro-code ROM 832. After the microcode ROM 832 finishes sequencing micro-ops for an instruction, the front end 801 of the machine resumes fetching micro-ops from the trace cache 830.

The out-of-order execution engine 803 is where the instructions are prepared for execution. The out-of-order execution logic has a number of buffers to smooth out and reorder the flow of instructions to optimize performance as they go down the pipeline and get scheduled for execution. The allocator logic allocates the machine buffers and resources that each uop needs in order to execute. The register renaming logic renames logic registers onto entries in a register set. The allocator also allocates an entry for each uop in one of the two uop queues, one for memory operations and one for non-memory operations, in front of the instruction schedulers: memory scheduler, fast scheduler 802, slow/general floating point scheduler 804, and simple floating point scheduler 806. The uop schedulers 802, 804, 806, determine when a uop is ready to execute based on the readiness of their dependent input register operand sources and the availability of the execution resources the uops need to complete their operation. The fast scheduler 802 of one implementation can schedule on each half of the main clock cycle while the other schedulers can only schedule once per main processor clock cycle. The schedulers arbitrate for the dispatch ports to schedule uops for execution.

Register sets 808, 810, sit between the schedulers 802, 804, 806, and the execution units 812, 814, 816, 818, 820, 822, 824 in the execution block 811. There is a separate register set 808, 810, for integer and floating point operations, respectively. Each register set 808, 810, of one implementation also includes a bypass network that can bypass or forward just completed results that have not yet been written into the register set to new dependent uops. The integer register set 808 and the floating point register set 810 are also capable of communicating data with the other. For one implementation, the integer register set 808 is split into two separate register sets, one register set for the low order 32 bits of data and a second register set for the high order 32 bits of data. The floating point register set 810 of one implementation has 128 bit wide entries because floating point instructions typically have operands from 64 to 128 bits in width.

The execution block 811 contains the execution units 812, 814, 816, 818, 820, 822, 824, where the instructions are actually executed. This section includes the register sets 808, 810, that store the integer and floating point data operand values that the micro-instructions need to execute. The processor 800 of one implementation is comprised of a number of execution units: address generation unit (AGU) 812, AGU 814, fast ALU 816, fast ALU 818, slow ALU 820, floating point ALU 812, floating point move unit 814. For one implementation, the floating point execution blocks 812, 814, execute floating point, MMX, SIMD, and SSE, or other operations. The floating point ALU 812 of one implementation includes a 64 bit by 64 bit floating point divider to execute divide, square root, and remainder micro-ops. For implementations of the disclosure, instructions involving a floating point value may be handled with the floating point hardware.

In one implementation, the ALU operations go to the high-speed ALU execution units 816, 818. The fast ALUs 816, 818, of one implementation can execute fast operations with an effective latency of half a clock cycle. For one implementation, most complex integer operations go to the slow ALU 820 as the slow ALU 820 includes integer execution hardware for long latency type of operations, such as a multiplier, shifts, flag logic, and branch processing. Memory load/store operations are executed by the AGUs 822, 824. For one implementation, the integer ALUs 816, 818, 820, are described in the context of performing integer operations on 64 bit data operands. In alternative implementations, the ALUs 816, 818, 820, can be implemented to support a variety of data bits including 16, 32, 128, 256, etc. Similarly, the floating point units 822, 824, can be implemented to support a range of operands having bits of various widths. For one implementation, the floating point units 822, 824, can operate on 128 bits wide packed data operands in conjunction with SIMD and multimedia instructions.

In one implementation, the uops schedulers 802, 804, 806, dispatch dependent operations before the parent load has finished executing. As uops are speculatively scheduled and executed in processor 800, the processor 800 also includes logic to handle memory misses. If a data load misses in the data cache, there can be dependent operations in flight in the pipeline that have left the scheduler with temporarily incorrect data. A replay mechanism tracks and re-executes instructions that use incorrect data. Only the dependent operations need to be replayed and the independent ones are allowed to complete. The schedulers and replay mechanism of one implementation of a processor are also designed to catch instruction sequences for text string comparison operations.

The term "registers" may refer to the on-board processor storage locations that are used as part of instructions to identify operands. In other words, registers may be those that are usable from the outside of the processor (from a programmer's perspective). However, the registers of an implementation should not be limited in meaning to a particular type of circuit. Rather, a register of an implementation is capable of storing and providing data, and performing the functions described herein. The registers described herein can be implemented by circuitry within a processor using any number of different techniques, such as dedicated physical registers, dynamically allocated physical registers using register renaming, combinations of dedicated and dynamically allocated physical registers, etc. In one implementation, integer registers store 32-bit integer data. A register set of one implementation also contains eight multimedia SIMD registers for packed data.

For the discussions herein, the registers are understood to be data registers designed to hold packed data, such as 64 bits wide MMX™ registers (also referred to as 'mm' registers in some instances) in microprocessors enabled with MMX technology from Intel Corporation of Santa Clara, California. These MMX registers, available in both integer and floating point forms, can operate with packed data elements that accompany SIMD and SSE instructions. Similarly, 128 bits wide XMM registers relating to SSE2, SSE3, SSE4, or beyond (referred to generically as "SSEx") technology can also be used to hold such packed data operands. In one implementation, in storing packed data and integer data, the registers do not need to differentiate between the two data types. In one implementation, integer and floating point are either contained in the same register set or different register sets. Furthermore, in one implementation, floating point and integer data may be stored in different registers or the same registers.

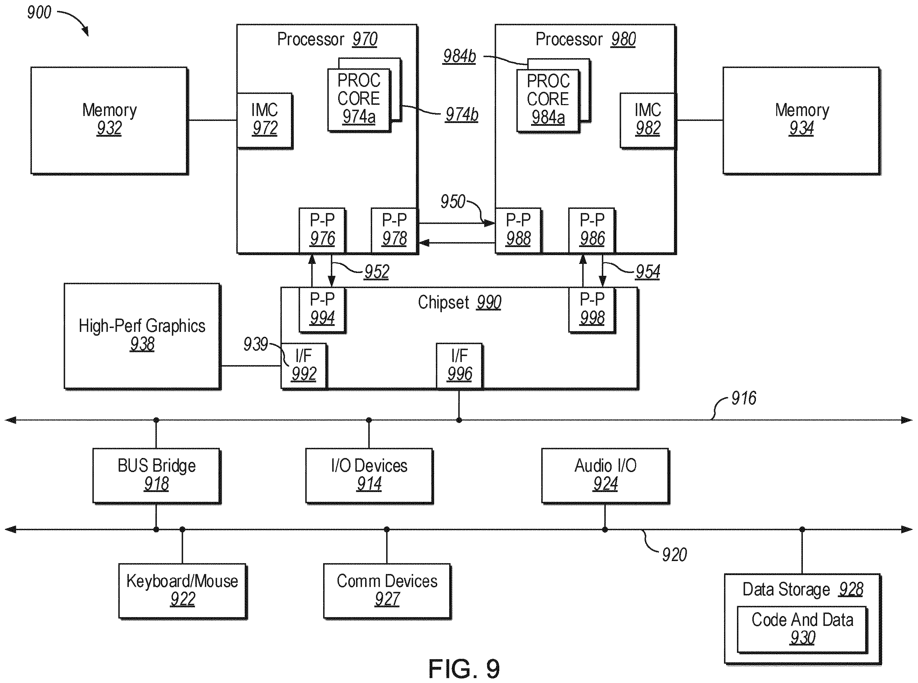

Implementations may be implemented in many different system types. Referring now to Figure 9, shown is a block diagram of a multiprocessor system 900 that may implement hardware support for dynamic memory allocation in heterogeneous memory systems. As shown in Figure 9, multiprocessor system 900 is a point-to-point interconnect system, and includes a first processor 970 and a second processor 980 coupled via a point-to-point interconnect 950. As shown in Figure 9, each of processors 970 and 980 may be multicore processors, including first and second processor cores (i.e., processor cores 974a and 974b and processor cores 984a and 984b), although potentially many more cores may be present in the processors. While shown with two processors 970, 980, it is to be understood that the scope of the disclosure is not so limited. In other implementations, one or more additional processors may be present in a given processor.

Processors 970 and 980 are shown including integrated memory controller units 972 and 982, respectively. Processor 970 also includes as part of its bus controller units point-to-point (P-P) interfaces 976 and 988; similarly, second processor 980 includes P-P interfaces 986 and 988. Processors 970, 980 may exchange information via a point-to-point (P-P) interface 950 using P-P interface circuits 978, 988. As shown in Figure 9, IMCs 972 and 982 couple the processors to respective memories, namely a memory 932 and a memory 934, which may be portions of main memory locally attached to the respective processors.

Processors 970, 980 may exchange information with a chipset 990 via individual P-P interfaces 952, 954 using point to point interface circuits 976, 994, 986, 998. Chipset 990 may also exchange information with a high-performance graphics circuit 938 via a high-performance graphics interface 939.

Chipset 990 may be coupled to a first bus 916 via an interface 996. In one implementation, first bus 916 may be a Peripheral Component Interconnect (PCI) bus, or a bus such as a PCI Express bus or interconnect bus, although the scope of the disclosure is not so limited.

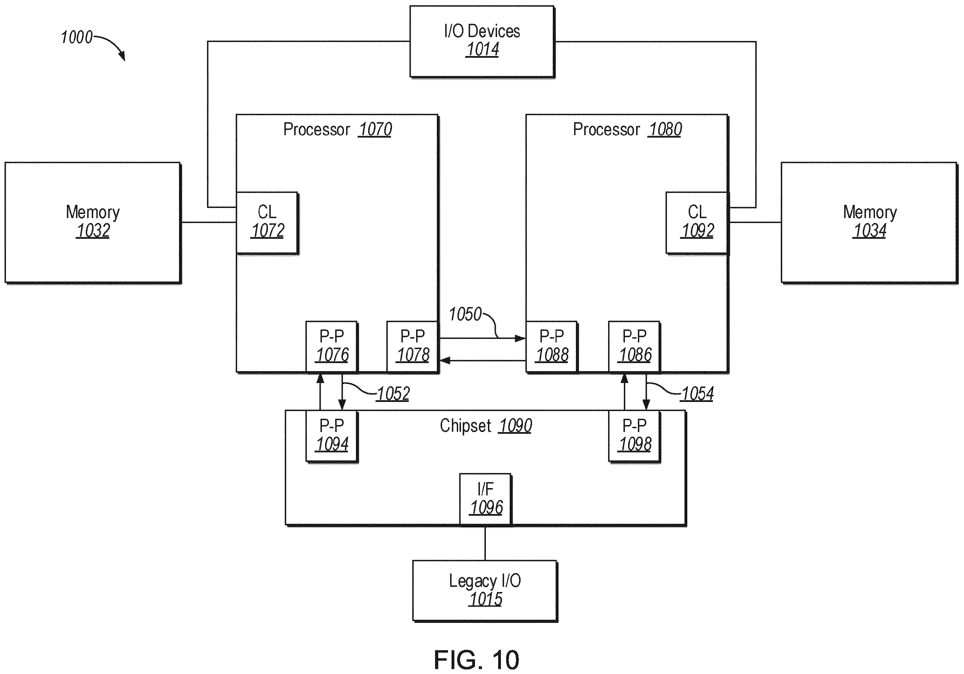

Referring now to Figure 10, shown is a block diagram of a third system 1000 that may implement hardware support for dynamic memory allocation in heterogeneous memory systems, in accordance with an implementation of the disclosure. Like elements in Figures 9 and 10 bear like reference numerals and certain aspects of Figure 10 have been omitted from Figure 9 in order to avoid obscuring other aspects of Figure 9.

Figure 10 illustrates that the processors 1070, 1080 may include integrated memory and I/O control logic ("CL") 1072 and 1092, respectively. For at least one implementation, the CL 1072, 1082 may include integrated memory controller units such as described herein. In addition. CL 1072, 1092 may also include I/O control logic. Figure 10 illustrates that the memories 1032, 1034 are coupled to the CL 1072, 1092, and that I/O devices 1014 are also coupled to the control logic 1072, 1092. Legacy I/O devices 1015 are coupled to the chipset 1090.

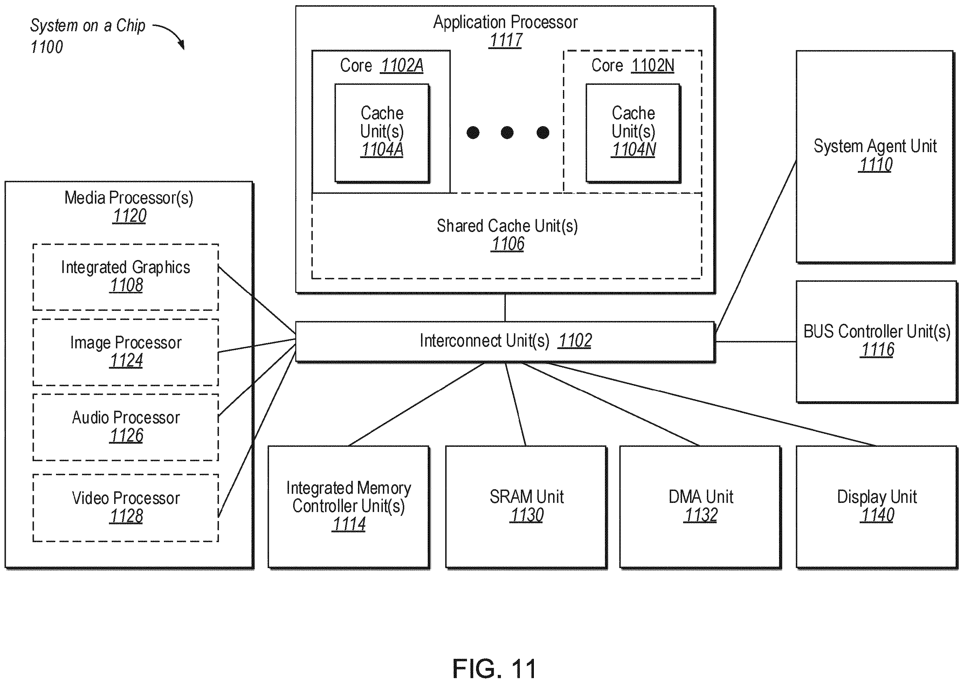

Figure 11 is an exemplary system on a chip (SoC) 1100 that may include one or more of the cores 1102A ... 1102N that may implement hardware support for dynamic memory allocation in heterogeneous memory systems. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Within the exemplary SoC 1100 of Figure 11, dashed lined boxes are features on more advanced SoCs. An interconnect unit(s) 1102 may be coupled to: an application processor 1117 which includes a set of one or more cores 1102A-N and shared cache unit(s) 1106; a system agent unit 1110; a bus controller unit(s) 1116; an integrated memory controller unit(s) 1114; a set of one or more media processors 1120 which may include integrated graphics logic 1108, an image processor 1124 for providing still and/or video camera functionality, an audio processor 1126 for providing hardware audio acceleration, and a video processor 1128 for providing video encode/decode acceleration; a static random access memory (SRAM) unit 1130; a direct memory access (DMA) unit 1132; and a display unit 1140 for coupling to one or more external displays.

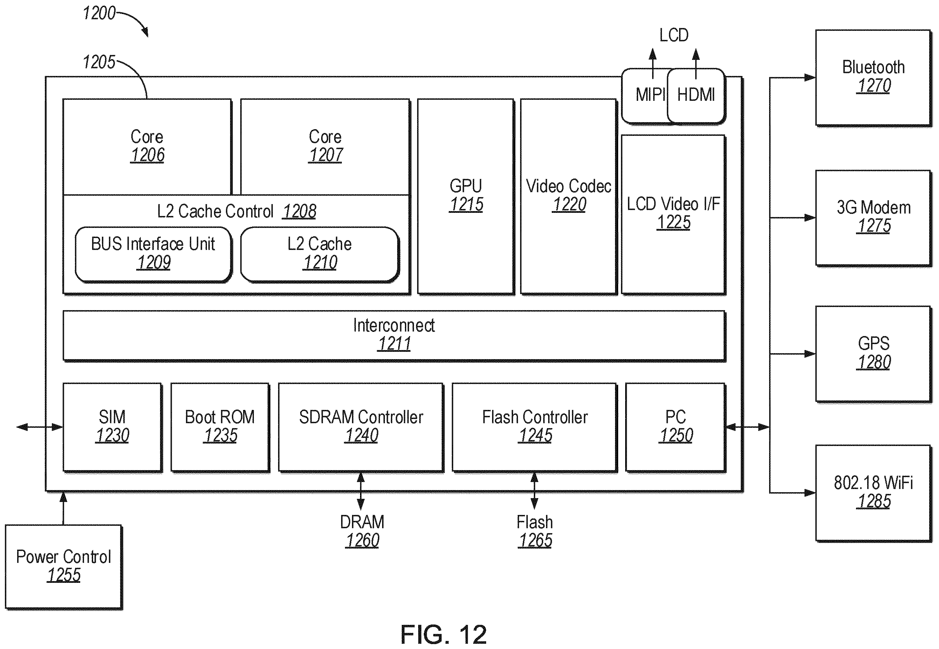

Turning next to Figure 12, an implementation of a system on-chip (SoC) design that may implement hardware support for dynamic memory allocation in heterogeneous memory systems, in accordance with implementations of the disclosure is depicted. As an illustrative example, SoC 1200 is included in user equipment (UE). In one implementation, UE refers to any device to be used by an end-user to communicate, such as a hand-held phone, smartphone, tablet, ultra-thin notebook, notebook with broadband adapter, or any other similar communication device. A UE may connect to a base station or node, which can correspond in nature to a mobile station (MS) in a GSM network. The implementations of the page additions and content copying can be implemented in SoC 1200.

Here, SoC 1200 includes 2 cores-1206 and 1207. Similar to the discussion above, cores 1206 and 1207 may conform to an Instruction Set Architecture, such as a processor having the Intel® Architecture Core™, an Advanced Micro Devices, Inc. (AMD) processor, a MIPS-based processor, an ARM-based processor design, or a customer thereof, as well as their licensees or adopters. Cores 1206 and 1207 are coupled to cache control 1208 that is associated with bus interface unit 1209 and L2 cache 1210 to communicate with other parts of system 1200. Interconnect 1211 includes an on-chip interconnect, such as an IOSF, AMBA, or other interconnects discussed above, which can implement one or more aspects of the described disclosure.

In one implementation, SDRAM controller 1240 may connect to interconnect 1211 via cache 1210. Interconnect 1211 provides communication channels to the other components, such as a Subscriber Identity Module (SIM) 1230 to interface with a SIM card, a boot ROM 1235 to hold boot code for execution by cores 1206 and 1207 to initialize and boot SoC 1200, a SDRAM controller 1240 to interface with external memory (e.g. DRAM 1260), a flash controller 1245 to interface with non-volatile memory (e.g. Flash 1265), a peripheral control 1250 (e.g. Serial Peripheral Interface) to interface with peripherals, video codecs 1220 and Video interface 1225 to display and receive input (e.g. touch enabled input), GPU 1215 to perform graphics related computations, etc. Any of these interfaces may incorporate aspects of the implementations described herein.

In addition, the system illustrates peripherals for communication, such as a Bluetooth® module 1270, 3G modem 1275, GPS 1280, and Wi-Fi® 1285. Note as stated above, a UE includes a radio for communication. As a result, these peripheral communication modules may not all be included. However, in a UE some form of a radio for external communication should be included.

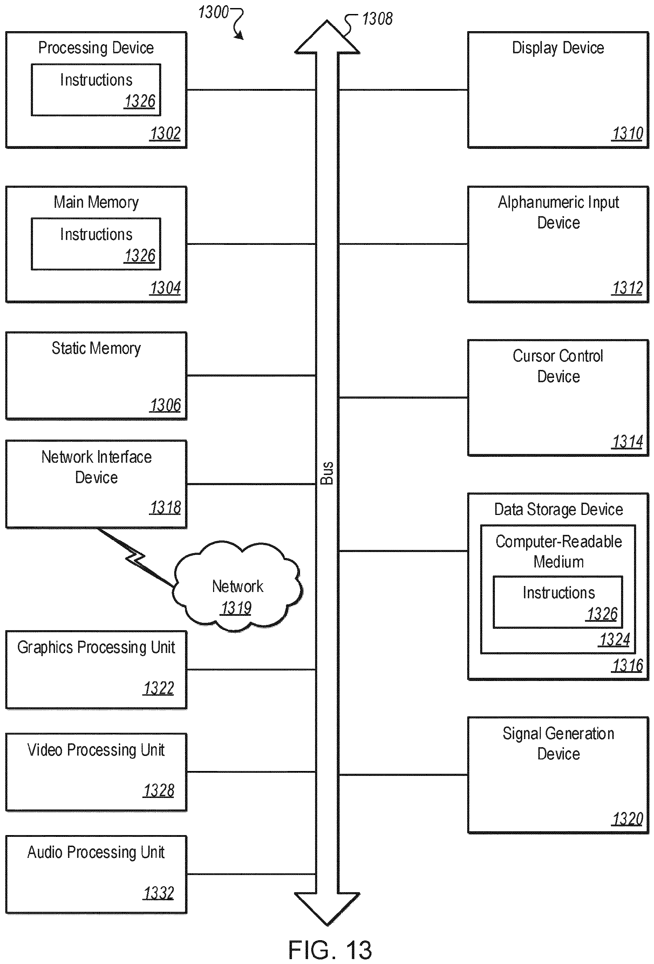

Figure 13 illustrates a diagrammatic representation of a machine in the example form of a computing system 1300 within which a set of instructions, for causing the machine to implement hardware support for dynamic memory allocation in heterogeneous memory systems according any one or more of the methodologies discussed herein. In alternative implementations, the machine may be connected (e.g., networked) to other machines in a LAN, an intranet, an extranet, or the Internet. The machine may operate in the capacity of a server or a client device in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. The implementations of the page additions and content copying can be implemented in computing system 1300.

The computing system 1300 includes a processing device 1302, main memory 1304 (e.g., flash memory, dynamic random access memory (DRAM) (such as synchronous DRAM (SDRAM) or DRAM (RDRAM), etc.), a static memory 1306 (e.g., flash memory, static random access memory (SRAM), etc.), and a data storage device 1316, which communicate with each other via a bus 1308.

Processing device 1302 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 1302 may also be one or more special-purpose processing devices such as an application-specific integrated circuit (ASIC), a field programmable gate array (FPGA), a digital signal processor (DSP), network processor, or the like. In one implementation, processing device 1302 may include one or more processor cores. The processing device 1302 is configured to execute the processing logic 1326 for performing the operations discussed herein.

In one implementation, processing device 1302 can be part of a processor or an integrated circuit that includes the disclosed LLC caching architecture. Alternatively, the computing system 1300 can include other components as described herein. It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

The computing system 1300 may further include a network interface device 1318 communicably coupled to a network 1319. The computing system 1300 also may include a video display device 1310 (e.g., a liquid crystal display (LCD) or a cathode ray tube (CRT)), an alphanumeric input device 1312 (e.g., a keyboard), a cursor control device 1314 (e.g., a mouse), a signal generation device 1320 (e.g., a speaker), or other peripheral devices. Furthermore, computing system 1300 may include a graphics processing unit 1322, a video processing unit 1328 and an audio processing unit 1332. In another implementation, the computing system 1300 may include a chipset (not illustrated), which refers to a group of integrated circuits, or chips, that are designed to work with the processing device 1302 and controls communications between the processing device 1302 and external devices. For example, the chipset may be a set of chips on a motherboard that links the processing device 1302 to very high-speed devices, such as main memory 1304 and graphic controllers, as well as linking the processing device 1302 to lower-speed peripheral buses of peripherals, such as USB, PCI or ISA buses.

The data storage device 1316 may include a computer-readable storage medium 1324 on which is stored software 1326 embodying any one or more of the methodologies of functions described herein. The software 1326 may also reside, completely or at least partially, within the main memory 1304 as instructions 1326 and/or within the processing device 1302 as processing logic during execution thereof by the computing system 1300; the main memory 1304 and the processing device 1302 also constituting computer-readable storage media.

The computer-readable storage medium 1324 may also be used to store instructions 1326 utilizing the processing device 1302, and/or a software library containing methods that call the above applications. While the computer-readable storage medium 1324 is shown in an example implementation to be a single medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instruction for execution by the machine and that cause the machine to perform any one or more of the methodologies of the disclosed implementations. The term "computer-readable storage medium" shall accordingly be taken to include, but not be limited to, solid-state memories, and optical and magnetic media.

The following examples pertain to further implementations.
Example 1 is a processor comprising: a processing core to execute a memory allocation call to allocate memory in a memory device; a last branch record (LBR) register to store information indicative of a recently retired branch instruction; and a performance monitoring unit (PMU) coupled to the LBR register, the PMU comprising a logic circuit to: retrieve the information from the LBR register prior to a memory allocation call being received by the processing core; and identify, based on the information, a signature of the memory allocation call; and provide the signature to the processing core.
In Example 2, the subject matter of Example 1, wherein the processing core is to execute software, wherein the software is to determine a memory tier to allocate memory for the memory allocation call using the signature prior to execution of the memory allocation call, and wherein the signature identifies an allocation path of instructions executed prior to execution of the memory allocation call.
In Example 3, the subject matter of any one of Examples 1-2, wherein the logic circuit comprises: a hash circuit to directly hash the recently retired branch instruction to the signature.
In Example 4, the subject matter of any one of Examples 1-3, wherein the signature is a scalar value that is associated with an allocation path.
In Example 5, the subject matter of any one of Examples 1-4, wherein the signature is associated with one or more memory buffers in memory previously allocated through the allocation path.
In Example 6, the subject matter of any one of Examples 1-5, wherein in response to executing the memory allocation call, the processing core is to allocate a memory buffer in the memory tier.
In Example 7 the subject matter of any one of Examples 1-6, wherein the PMU is to: collect an address and a size of the memory buffer from the memory allocation call; and collect data associated with accesses of the memory buffer.
Various implementations may have different combinations of the structural features described above. For instance, all optional features of the processors and methods described above may also be implemented with respect to a system described herein and specifics in the examples may be used anywhere in one or more implementations.
Example 8 is a system comprising: a memory; and a processing device, operatively coupled to the memory, the processing device to: retrieve last branch records (LBRs) from LBR registers prior to executing a memory allocation call; identify, based on the LBRs, an execution context of the memory allocation call; and determine a memory tier to allocate memory for the memory allocation call based on the execution context.
In Example 9, the subject matter of Example 8, wherein the LBRs retrieved from the LBR registers comprise an LBR vector, representing information regarding retired branch instructions, stored in the LBR registers.
In Example 10 the subject matter of any one of Examples 8-9, wherein the processing device, to identify the execution context of the memory allocation call, is to apply a hash function to the LBR vector to identify a signature associated with the execution context.
In Example 11, the subject matter of any one of Examples 8-10, wherein the execution context comprises an allocation path, the allocation path being a series of retired branch instructions leading up to the memory allocation call.
In Example 12, the subject matter of any one of Examples 8-11, wherein the processing device is further to store a virtual address pointer generated for the memory allocation call with the signature in an associative data structure.
In Example 13, the subject matter of any one of Examples 8-12, wherein the signature is a scalar value that is associated with a memory buffer, wherein the memory buffer is an allocation of the memory that was assigned to the signature when a previous memory allocation call was executed.
In Example 14, the subject matter of any one of Examples 8-13, the processing device further to: allocate a memory buffer in response to executing the memory allocation call; collect an address of the memory buffer and a size of the memory buffer; and collect data associated with accesses of memory at the address of the memory buffer.
   Various implementations may have different combinations of the structural features described above. For instance, all optional features of the processors and methods described above may also be implemented with respect to a system described herein and specifics in the examples may be used anywhere in one or more implementations.
Example 15 is a method comprising: retrieving a last branch register (LBR) vector from a stack of LBR registers prior to a memory allocation call; determining a unique signature using the LBR vector, the signature representing an allocation path of the memory allocation call; selecting a tier of memory from a plurality of tiers of memory based on the signature; and assigning a memory buffer for the memory allocation call in the tier of memory.
In Example 16, the subject matter of Example 15, further comprising: collecting a size of the memory buffer and a virtual address of the memory buffer; monitoring accesses of memory at the virtual address of the memory buffer; and updating information associated with the signature based on the accesses of memory at the virtual address of the memory buffer.
In Example 17, the subject matter of any one of Examples 15-16, wherein selecting the tier of memory comprises: identifying access information associated with the signature; and determining, based on the access information, a cost of the memory allocation.
In Example 18, the subject matter of any one of Examples 15-17, further comprising aggregating memory access information for a plurality of memory buffers associated with the signature.
In Example 19 the subject matter of any one of Examples 15-18, wherein selecting the tier of memory comprises: determining access rates of memory buffers associated with the signature; and determining a total amount of memory allocated to memory buffers associated with the signature.
In Example 20 the subject matter of any one of Examples 15-19, further comprising: determining an access density associated with the signature based on the access rates and the total amount of memory allocated to memory buffers associated with the signature; and categorizing the signature into one of a plurality of categories based on the access density associated with the signature.
Example 21 is a system comprising means to perform a method of any one of the Examples 15-20.
Example 22 is at least one non-transitory machine readable storage medium comprising a plurality of instructions, when executed, to implement a method or realize an apparatus of any one of Examples 15-20.
Example 23 is an apparatus comprising a processor configured to perform the method of any one of Examples 15-20.

While the disclosure has been described with respect to a limited number of implementations, those skilled in the art will appreciate numerous modifications and variations therefrom. It is intended that the appended claims cover all such modifications and variations as fall within the true spirit and scope of this disclosure.

In the description herein, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the disclosure. It will be apparent, however, to one skilled in the art that these specific details need not be employed to practice the disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of a computer system have not been described in detail in order to avoid unnecessarily obscuring the disclosure.

The implementations are described with reference to determining validity of data in cache lines of a sector-based cache in specific integrated circuits, such as in computing platforms or microprocessors. The implementations may also be applicable to other types of integrated circuits and programmable logic devices. For example, the disclosed implementations are not limited to desktop computer systems or portable computers, such as the Intel® Ultrabooks™ computers. And may be also used in other devices, such as handheld devices, tablets, other thin notebooks, systems on a chip (SoC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that can perform the functions and operations taught below. It is described that the system can be any kind of computer or embedded system. The disclosed implementations may especially be used for low-end devices, like wearable devices (e.g., watches), electronic implants, sensory and control infrastructure devices, controllers, supervisory control and data acquisition (SCADA) systems, or the like. Moreover, the apparatuses, methods, and systems described herein are not limited to physical computing devices, but may also relate to software optimizations for energy conservation and efficiency. As will become readily apparent in the description below, the implementations of methods, apparatuses, and systems described herein (whether in reference to hardware, firmware, software, or a combination thereof) are vital to a 'green technology' future balanced with performance considerations.

Although the implementations herein are described with reference to a processor, other implementations are applicable to other types of integrated circuits and logic devices. Similar techniques and teachings of implementations of the disclosure can be applied to other types of circuits or semiconductor devices that can benefit from higher pipeline throughput and improved performance. The teachings of implementations of the disclosure are applicable to any processor or machine that performs data manipulations. However, the disclosure is not limited to processors or machines that perform 512 bit, 256 bit, 128 bit, 64 bit, 32 bit, or 16 bit data operations and can be applied to any processor and machine in which manipulation or management of data is performed. In addition, the description herein provides examples, and the accompanying drawings show various examples for the purposes of illustration. However, these examples should not be construed in a limiting sense as they are merely intended to provide examples of implementations of the disclosure rather than to provide an exhaustive list of all possible implementations of implementations of the disclosure.

Although the above examples describe instruction handling and distribution in the context of execution units and logic circuits, other implementations of the disclosure can be accomplished by way of a data or instructions stored on a machine-readable, tangible medium, which when performed by a machine cause the machine to perform functions consistent with at least one implementation of the disclosure. In one implementation, functions associated with implementations of the disclosure are embodied in machine-executable instructions. The instructions can be used to cause a general-purpose or special-purpose processor that is programmed with the instructions to perform the steps of the disclosure. Implementations of the disclosure may be provided as a computer program product or software which may include a machine or computer-readable medium having stored thereon instructions which may be used to program a computer (or other electronic devices) to perform one or more operations according to implementations of the disclosure. Alternatively, operations of implementations of the disclosure might be performed by specific hardware components that contain fixed-function logic for performing the operations, or by any combination of programmed computer components and fixed-function hardware components.

Instructions used to program logic to perform implementations of the disclosure can be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of implementations of the disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one implementation, refers to the hardware, which is specifically configured to recognize and/or execute the code to be held on a non-transitory medium. Furthermore, in another implementation, use of a module refers to the non-transitory medium including the code, which is specifically adapted to be executed by the microcontroller to perform predetermined operations. And as can be inferred, in yet another implementation, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one implementation, use of the term logic includes hardware, such as transistors, registers, or other hardware, such as programmable logic devices.

Use of the phrase 'configured to,' in one implementation, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and/or 'operable to,' in one implementation, refers to some apparatus, logic, hardware, and/or element designed in such a way to enable use of the apparatus, logic, hardware, and/or element in a specified manner. Note as above that use of 'to,' 'capable to,' or 'operable to,' in one implementation, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one implementation, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one implementation, refer to a default and an updated value or state, respectively. For example, a default value potentially includes a high logical value, i.e. reset, while an updated value potentially includes a low logical value, i.e. set. Note that any combination of values may be utilized to represent any number of states.

The implementations of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform implementations of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer)

Reference throughout this specification to "one implementation" or "an implementation" means that a particular feature, structure, or characteristic described in connection with the implementation is included in at least one implementation of the disclosure. Thus, the appearances of the phrases "in one implementation" or "in an implementation" in various places throughout this specification are not necessarily all referring to the same implementation. Furthermore, the particular features, structures, or characteristics may be combined in any suitable manner in one or more implementations.

In the foregoing specification, a detailed description has been given with reference to specific exemplary implementations. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of implementation and other exemplarily language does not necessarily refer to the same implementation or the same example, but may refer to different and distinct implementations, as well as potentially the same implementation.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is, here and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers or the like. The blocks described herein can be hardware, software, firmware or a combination thereof.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "defining," "receiving," "determining," "issuing," "linking," "associating," "obtaining," "authenticating," "prohibiting," "executing," "requesting," "communicating," or the like, refer to the actions and processes of a computing system, or similar electronic computing device, that manipulates and transforms data represented as physical (e.g., electronic) quantities within the computing system's registers and memories into other data similarly represented as physical quantities within the computing system memories or registers or other such information storage, transmission or display devices.

The words "example" or "exemplary" are used herein to mean serving as an example, instance or illustration. Any aspect or design described herein as "example' or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" or "an implementation" or "one implementation" throughout is not intended to mean the same implementation or implementation unless described as such. Also, the terms "first," "second," "third," "fourth," etc. as used herein are meant as labels to distinguish among different elements and may not necessarily have an ordinal meaning according to their numerical designation.

## Claims

1. A processor comprising:
a processing core to execute a memory allocation call to allocate memory in a memory device;
a last branch record (LBR) register to store information indicative of a recently retired branch instruction; and
a performance monitoring unit (PMU) coupled to the LBR register, the PMU comprising a logic circuit to:
retrieve the information from the LBR register prior to a memory allocation call being received by the processing core; and
identify, based on the information, a signature of the memory allocation call; and
provide the signature to the processing core.

2. The processor of claim 1, wherein the processing core is to execute software, wherein the software is to determine a memory tier to allocate memory for the memory allocation call using the signature prior to execution of the memory allocation call, and wherein the signature identifies an allocation path of instructions executed prior to execution of the memory allocation call.

3. The processor of any of claims 1-2, wherein the logic circuit comprises a hash circuit to directly hash the recently retired branch instruction to the signature.

4. The processor of any of claims 2-3, wherein the signature is a scalar value that is associated with an allocation path, and wherein the signature is associated with one or more memory buffers in memory previously allocated through the allocation path.

5. The processor of any of claims 2-4, wherein in response to executing the memory allocation call, the processing core is to allocate a memory buffer in the memory tier, and wherein the PMU is to:
collect an address and a size of the memory buffer from the memory allocation call; and
collect data associated with accesses of the memory buffer.

6. A system comprising:
a memory; and
a processing device, operatively coupled to the memory, the processing device to:
retrieve last branch records (LBRs) from LBR registers prior to executing a memory allocation call;
identify, based on the LBRs, an execution context of the memory allocation call; and
determine a memory tier to allocate memory for the memory allocation call based on the execution context.

7. The system of claim 6, wherein the LBRs retrieved from the LBR registers comprise an LBR vector, representing information regarding retired branch instructions, stored in the LBR registers, and wherein the processing device, to identify the execution context of the memory allocation call, is to apply a hash function to the LBR vector to identify a signature associated with the execution context.

8. The system of claim 7, wherein the processing device is further to store a virtual address pointer generated for the memory allocation call with the signature in an associative data structure.

9. The system of claim 7, wherein the signature is a scalar value that is associated with a memory buffer, wherein the memory buffer is an allocation of the memory that was assigned to the signature when a previous memory allocation call was executed.

10. The system of any of claims 6-9, wherein the execution context comprises an allocation path, the allocation path being a series of retired branch instructions leading up to the memory allocation call.

11. The system of any of claims 6-10, the processing device further to:
allocate a memory buffer in response to executing the memory allocation call;
collect an address of the memory buffer and a size of the memory buffer; and
collect data associated with accesses of memory at the address of the memory buffer.

12. A method comprising:
retrieving a last branch register (LBR) vector from a stack of LBR registers prior to a memory allocation call;
determining a unique signature using the LBR vector, the signature representing an allocation path of the memory allocation call;
selecting a tier of memory from a plurality of tiers of memory based on the signature; and
assigning a memory buffer for the memory allocation call in the tier of memory.

13. The method of claim 12, further comprising:
collecting a size of the memory buffer and a virtual address of the memory buffer;
monitoring accesses of memory at the virtual address of the memory buffer; and
updating information associated with the signature based on the accesses of memory at the virtual address of the memory buffer.

14. The method of any of claims 12-13, wherein selecting the tier of memory comprises:
identifying access information associated with the signature; and
determining, based on the access information, a cost of the memory buffer; and
wherein the method further comprises aggregating memory access information for a plurality of memory buffers associated with the signature.

15. The method of any of claims 12-14, wherein selecting the tier of memory comprises:
determining access rates of memory buffers associated with the signature; and
determining a total amount of memory allocated to memory buffers associated with the signature; and
wherein the method further comprises:
determining an access density associated with the signature based on the access rates and the total amount of memory allocated to memory buffers associated with the signature; and
categorizing the signature into one of a plurality of categories based on the access density associated with the signature.
